# EUROPÄISCHE PATENTSCHRIFT

(11) **EP 2 963 310 B1**
(45) Veröffentlichungstag und Bekanntmachung des Hinweises auf die Patenterteilung: **08.09.2021**
(21) Anmeldenummer: 14175646.0
(22) Anmeldetag: 03.07.2014
(51) Int. Cl.: F16D 3/18, F16D 1/033

(54) **Doppelkardanische Zahnkupplung**
Double cardanic tooth coupling
Accouplement à dents à double cardan

(43) Veröffentlichungstag der Anmeldung: 06.01.2016
(73) Patentinhaber: Flender GmbH, 46395 Bocholt (DE)
(72) Erfinder: Jansen, Andre, 46325 Borken (DE); Ritter, Norbert, 47058 Duisburg (DE)
(74) Vertreter: Michalski Hüttermann & Partner Patentanwälte mbB

(56) Entgegenhaltungen:
- WO-A1-2011/120510
- DE-B- 1 174 114
- DE-B3-102013 205 902
- DE-C- 807 873
- JP-U- S51 112 160
- US-A- 2 136 947

## Beschreibung

Die vorliegende Erfindung betrifft eine Zahnkupplung der doppelkardanischen Bauart.

Doppelkardanische Zahnkupplungen dienen zum Verbinden einer treibenden Welle mit einer getriebenen Welle. Derartige Kupplungen sind in der Lage, radiale, axiale und winkelige Verlagerungen der beiden durch die Zahnkupplung verbundenen Wellen auszugleichen.

EP 0 632 210 A1 (Hurth Getriebe und Zahnräder GmbH) 04.01.1995 beschreibt eine solche doppelkardanische Zahnkupplung, die für ein Antriebsaggregat eines Schienenfahrzeugs geeignet ist. Die Kupplung umfasst ein erstes innenverzahntes Kupplungsteil, das eine Nabe aufweist zum drehfesten Aufsetzen auf die treibende Welle, sowie ein zweites innenverzahntes Kupplungsteil, das eine Nabe aufweist zum drehfesten Aufsetzen auf die getriebene Welle. Die Kupplung umfasst ferner ein hohlzylindrisches Verbindungsglied, das an seinen beiden Endbereichen je eine ballige Außenverzahnung aufweist, von denen die eine in die Innenverzahnung des ersten Kupplungsteils und die andere in die Innenverzahnung des zweiten Kupplungsteils eingreift.

Aus JP-S551 112160 U ist eine doppelkardanische Kupplung bekannt, die eine Verbindungswelle aufweist, die als geteilte Vollwelle ausgebildet ist an ihren Enden mit einer Außenverzahnung versehen ist. Die Außenverzahnungen greifen in Innenverzahnungen ein, die an Kupplungshälften ausgebildet sind, die jeweils über einen Flansch mit einer Welle verbindbar sind.

Die Druckschrift US 2,136,947 A offenbart eine doppelkardanische Kupplung, die eine Vollwelle umfasst, die an ihren Enden mit Bogenverzahnungen versehen ist. Die Bogenverzahnungen greifen im montierten Zustand in Innenverzahnungen von Kupplungshälften ein, die endseitig Ausnehmungen aufweisen, die zur drehmomentübertragenden Aufnahme von je einer Welle geeignet sind.

Weitere Zahnkupplungen für den Einsatz im Bahnbereich sind die FLENDER Bahnkupplungen der Baureihe ZBG der Siemens AG, 46395 Bocholt (DE), welche im Siemens-Katalog "Bewährte Verbindungen" aus dem Jahr 2011, Bestell-Nr. E20001-A60-P900-V2, beschrieben sind. ZBG-Kupplungen erlauben sehr große Wellenversatzwerte. Sie sind sehr robust und mit einem langlebigen Fett-Schmiermittel ausgeführt.

Der Erfindung liegt die Aufgabe zugrunde, eine verbesserte Zahnkupplung der genannten Bauart anzugeben.

Diese Aufgabe wird erfindungsgemäß durch eine Zahnkupplung mit den in Anspruch 1 angegebenen Merkmalen gelöst.

Die erfindungsgemäße Zahnkupplung der doppelkardanischen Bauart umfasst ein erstes innenverzahntes Kupplungsteil zum drehfesten Verbinden mit einer treibenden Welle, ein zweites innenverzahntes Kupplungsteil zum drehfesten Verbinden mit einer getriebenen Welle, und ein zylindrisches Verbindungsglied, das an seinen beiden Endbereichen je eine Außenverzahnung aufweist, von denen die eine in die Innenverzahnung des ersten Kupplungsteils und die andere in die Innenverzahnung des zweiten Kupplungsteils eingreift. Zumindest eines der beiden innenverzahnten Kupplungsteile weist einen Flansch auf zur Ausbildung einer drehfesten Schraubverbindung mit der entsprechenden Welle. Dabei ist das außenverzahnte Verbindungsglied einteilig ausgebildet.

Erfindungsgemäß ist das Verbindungsglied hohlzylindrisch geformt. Dadurch wird die Masse des Verbindungsglieds im Vergleich zu einem vollzylindrischen Bauteil noch weiter reduziert, ohne dass die Belastbarkeit signifikant reduziert wird. Das Verbindungsglied kann als eine Hülse oder ein Rohr ausgebildet sein. Somit eröffnet sich die Palette handelsüblicher Halbzeuge, z.B. Rohre geeigneter Werkstoffe.

Ferner sind Endbereiche des hohlzylindrischen Verbindungsglieds mit den Außenverzahnungen nach außen gestülpt ausgebildet, so dass diese einander zugewandt ausgebildet sind.

Die Kupplungsteile können einstückig hergestellt oder aus zwei oder mehr Teilen zusammengesetzt sein. Das Kupplungsteil, welches den Flansch aufweist, kann ein innenverzahntes Teil und ein Flanschteil aufweisen, wobei das innenverzahnte Teil und das Flanschteil mittels einer Stirnverzahnung und einer Schraubverbindung miteinander drehfest verbunden sind.

In vielen Fällen findet eine Zahnkupplung der doppelkardanischen Bauart Anwendung zur Herstellung einer Verbindung zwischen einem Motor und einem Getriebe, d. h. die Kupplung verbindet eine Motorausgangswelle mit einer Getriebeeingangswelle. Aus diesem Grund werden im Folgenden die Begriffe "Motorwelle" und "treibende Welle" synonym benutzt; entsprechendes gilt für "Getriebewelle" und "getriebene Welle". Weitere Einsatzorte der Kupplung, z.B. zwischen einem Getriebe und einer Achse, sind aber dadurch in keiner Weise eingeschränkt.

Bei der vorliegenden Erfindung wird gegenüber den bisher bekannten ZBG-Kupplungen das zweiteilige Verbindungsglied durch ein einteiliges Verbindungsglied ersetzt. Ein einteiliges Verbindungsglied ist kostengünstiger, insbesondere durch eine Reduktion der Herstellkosten, hat eine geringere Masse und reduziert die Bauteilanzahl. Die neue Gestaltung hat Potential zur weiteren Verbesserung der dynamischen Eigenschaften.

Bei der vorliegenden Erfindung wird gegenüber den bisher bekannten ZBG-Kupplungen die Schnittstelle Motor-Getriebe von der Kupplungslängsachse radial nach außen an den Rand der Kupplung verlagert. Der Bauraum, der durch den Entfall der Verbindung Wellenende - Nabe in der axialen Mitte der Kupplung gewonnen wird, kann zu einer kompakteren Gestaltung der Verzahnung genutzt werden.

Wichtige technische Vorteile der vorliegenden Erfindung gegenüber den bisher bekannten Zahnkupplungen sind darin zu sehen, dass das einteilige außenverzahnte Verbindungsglied eine geringere Masse aufweist und alle betrieblichen Verlagerungen innerhalb der Kupplung aufgenommen werden, ohne Kollisionsgefahr mit umgebenden Komponenten in einer Anlage. Die geringe freie Masse sowie der stets konstante Gelenkpunktabstand sorgen für eine hohe Zuverlässigkeit im Betrieb.

Die vorliegende Erfindung realisiert den Ersatz der klassischen Wellen-Nabe-Verbindung zur Übertragung des Drehmoments durch eine Schraubverbindung. Das hat eine Verlegung der mechanischen Schnittstelle der Verbindung Motorwelle-Getriebewelle zum Motor oder zum Getriebe hin zur Folge, unter Verwendung klassischer Montagemethoden: die Schnittstelle zum Kunden ist nun eine klassische Schraubverbindung. Die Schraubverbindung ist eine einfach lösbare Verbindung; dies stellt insbesondere unter dem Aspekt einer einfachen Wartung einen erheblichen Vorteil dar.

Vorteilhafte Ausgestaltungen und Weiterbildungen der Erfindung sind in den abhängigen Ansprüchen angegeben.

Es ist bevorzugt, dass das zylindrische Verbindungsglied an seinen beiden Endbereichen je eine ballige Außenverzahnung aufweist. Die ballige Verzahnung erlaubt einen Winkelversatz.

Gemäß einer vorteilhaften Ausgestaltung weist das erste innenverzahnte Kupplungsteil eine Nabe auf zum drehfesten Aufsetzen auf die treibende Welle, insbesondere eine Motorausgangswelle, und das zweite innenverzahnte Kupplungsteil weist einen Flansch auf zur Ausbildung einer drehfesten Schraubverbindung mit der getriebenen Welle, insbesondere eine Getriebeeingangswelle. Das bietet den Vorteil, dass die Schraubverbindung zwischen der Kupplung und dem Getriebe einfach lösbar ist, während die Kupplung sicher auf der Motorwelle gehalten wird.

Gemäß einer vorteilhaften Ausgestaltung weist der Flansch eine Stirnverzahnung auf zum Eingreifen in eine korrespondierende Verzahnung der entsprechenden Welle. Eine Stirnverzahnung erlaubt die Übertragung eines hohen Drehmomentes. Als Stirnverzahnung kann z.B. eine Oerlikon-Stirnverzahnung zum Einsatz kommen. Es ist auch möglich, dass der Flansch des zweiten Kupplungsteils und die Welle mittels einer Kegelverbindung verbunden sind. Es ist von Vorteil, wenn es die Schraubverbindung zwischen dem Flansch und der entsprechenden Welle erlaubt, dass nachträglich Wälzlager auf die Welle aufgezogen werden.

Gemäß einer vorteilhaften Ausgestaltung besteht das Verbindungsglied aus einem elektrisch isolierenden Material, vorzugsweise aus GFK (= glasfaserverstärkter Kunststoff). Dadurch kann die Kupplung eine elektrische Isolierungsfunktion für An- und Abtrieb übernehmen, z.B. bei Umrichter gespeisten Antrieben.

Eine weitere vorteilhafte Ausgestaltung der Erfindung ist ein Schienenfahrzeug mit einer erfindungsgemäßen Zahnkupplung. Es ist dabei möglich, dass die Zahnkupplung eine Motorausgangswelle und eine Getriebeeingangswelle miteinander verbindet, z.B. indem die Kupplung zwischen einem Motor und einem Getriebe angeordnet ist. Dies bietet erhebliche Vorteile bezüglich einer einfachen Demontage bzw. Trennung des Antriebsstrangs im Wartungs- und Reparaturfall.

Im Folgenden wird die Erfindung anhand eines Ausführungsbeispiels unter Zuhilfenahme der Zeichnungen erläutert. Es zeigt jeweils schematisch und nicht maßstabsgetreu
- Fig. 1: einen Längsschnitt durch eine FLENDER Bahnkupplung der Baureihe ZBG;
- Fig. 2: einen Längsschnitt durch eine erfindungsgemäße Zahnkupplung;
- Fig. 3: eine Ansicht einer erfindungsgemäßen Zahnkupplung zwischen zwei Wellen; und
- Fig. 4: eine Untersicht eines Schienenfahrzeugs mit einer erfindungsgemäßen Zahnkupplung.

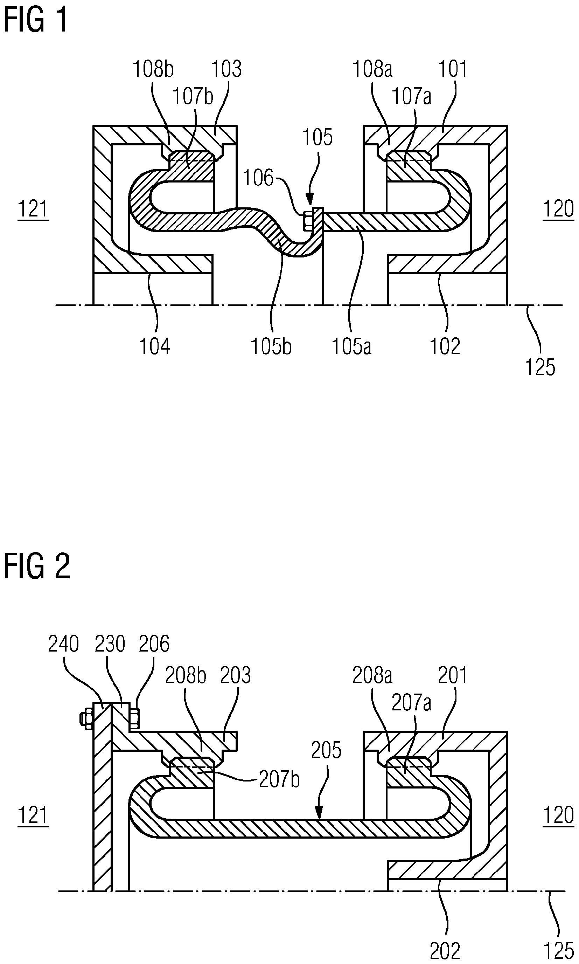

Fig. 1 zeigt einen Längsschnitt durch eine FLENDER Bahnkupplung der Baureihe ZBG. Die Kupplung umfasst ein erstes innenverzahntes 108a Kupplungsteil 101, das eine Nabe 102 aufweist zum drehfesten Verbinden mit einer treibenden Welle, ein zweites innenverzahntes 108b Kupplungsteil 103, das eine Nabe 104 aufweist zum drehfesten Verbinden mit einer getriebenen Welle, und ein zylindrisches Verbindungsglied 105, bestehend aus zwei mittels einer Schraubenverbindung 106 miteinander verbundenen Elementen 105a, 105b, welches an seinen beiden Endbereichen je eine ballige Außenverzahnung 107a, 107b aufweist, von denen die eine 107a in die Innenverzahnung 108a des ersten Kupplungsteils 101 und die andere in die Innenverzahnung 108b des zweiten Kupplungsteils 103 eingreift. Die Kupplung ist bezüglich einer Mittelachse 125 rotationssymmetrisch.

Die treibende Welle, z.B. eine Motorausgangswelle, wird an einer ersten Stirnseite 120 der Kupplung in die Nabe 102 des ersten Kupplungsteils 101 geführt und drehfest mit dieser verbunden, z.B. durch eine Pressverbindung.

Die getriebene Welle, z.B. eine Getriebeeingangswelle, wird an einer zweiten Stirnseite 121 der Kupplung in die Nabe 104 des zweiten Kupplungsteils 103 geführt und drehfest mit dieser verbunden, z.B. durch eine Pressverbindung.

Fig. 2 zeigt einen Längsschnitt durch eine erfindungsgemäße Zahnkupplung. Die Kupplung umfasst ein erstes innenverzahntes 208a Kupplungsteil 201, das eine Nabe 202 aufweist zum drehfesten Verbinden mit einer treibenden Welle. Die Kupplung umfasst weiter ein zweites innenverzahntes 208b Kupplungsteil 203, das einen Flansch 240 aufweist zum drehfesten Verbinden mit einer getriebenen Welle. Dabei weist das zweite Kupplungsteil 203 ein innenverzahntes Teil mit einem ringförmigen Flansch 230 und ein Flanschteil mit einem scheibenförmigen Flansch 240 auf, wobei der ringförmige Flansch 230 mittels einer Schraubverbindung 206 auf den scheibenförmigen Flansch 240 gepresst wird und zwischen dem ringförmigen Flansch 230 und dem scheibenförmigen Flansch 240 eine Stirnverzahnung zur Drehmomentübertragung ausgebildet ist. Der ringförmige Flansch 230 und der scheibenförmige Flansch 240 weisen an ihren Stirnseiten jeweils Stirnverzahnungen auf, die beim Aneinanderpressen der Flansche 230, 240 ineinander greifen.

Außerdem umfasst die Kupplung ein einteiliges hohlzylindrisches Verbindungsglied 205, welches an seinen beiden Endbereichen je eine ballige Außenverzahnung 207a, 207b aufweist, von denen die eine 207a in die Innenverzahnung 208a des ersten Kupplungsteils 201 und die andere in die Innenverzahnung 208b des zweiten Kupplungsteils 203 eingreift. Die Kupplung ist bezüglich einer Mittelachse 125 rotationssymmetrisch.

Die treibende Welle, z.B. eine Motorausgangswelle, wird an einer ersten Stirnseite 120 der Kupplung in die Nabe 202 des ersten Kupplungsteils 201 geführt und drehfest mit dieser verbunden, z.B. durch eine Pressverbindung.

Die getriebene Welle, z.B. eine Getriebeeingangswelle, wird an einer zweiten Stirnseite 121 der Kupplung über eine Schraubverbindung mit dem scheibenförmigen Flansch 240 des zweiten Kupplungsteils 203 verbunden.

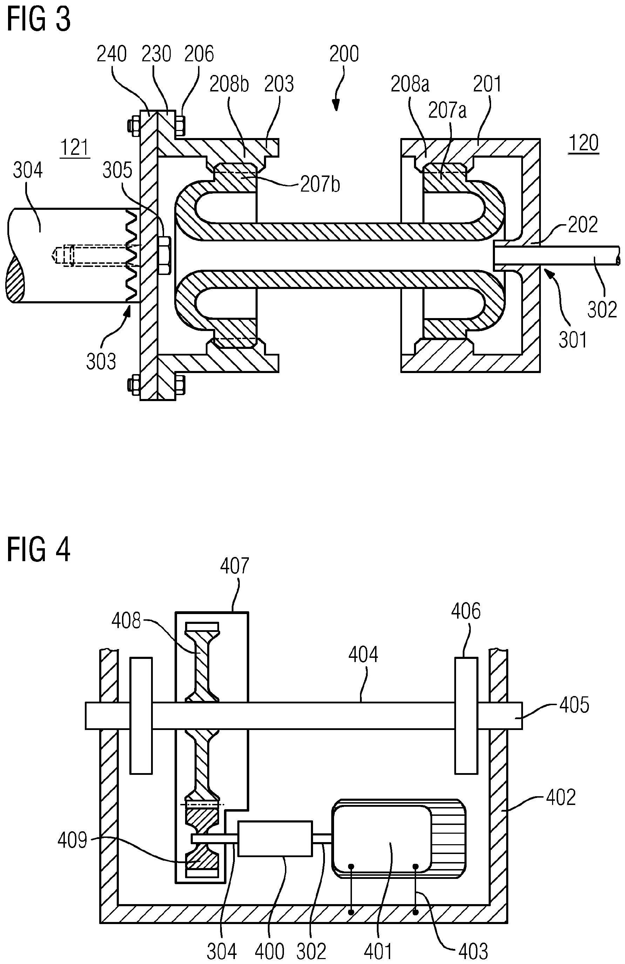

Fig. 3 zeigt eine Ansicht einer erfindungsgemäßen Zahnkupplung 200, welche zwei Wellen 302, 304 drehfest miteinander verbindet. Eine an einem ersten Kupplungsteil 201 der Kupplung 200 angeordnete Nabe 202 ist über einen Pressverband mit einer ersten Welle 302 verbunden, so dass eine Welle-Nabe-Verbindung 301 gebildet wird. Ein an einer von der Kupplung 200 abgewandten Stirnseite stirnverzahnter Flansch 240 des zweiten Kupplungsteils 203 ist durch eine Stirnverzahnung 303 drehfest mit einer zweiten Welle 304 verbunden, wobei die Stirnverzahnung 303 durch eine den Flansch 240 an ein Stirnende der zweiten Welle 304 pressende Schraube 305 in Verzahnungseingriff gehalten wird.

Fig. 4 zeigt eine Untersicht eines Schienenfahrzeugs mit einer erfindungsgemäßen Zahnkupplung 400, die eine Motorausgangswelle 302 und eine Getriebeeingangswelle 304 verbindet. Ein an einem Fahrzeugrahmen 402 aufgehängter 403 Elektromotor 401 treibt die Motorausgangswelle 302 an. Die Rotation der Motorausgangswelle 302 wird mithilfe der Zahnkupplung 400 auf die Getriebeeingangswelle 304 eines Getriebes 407 übertragen. Dabei ist die Getriebeeingangswelle 304 drehfest mit einem zweiten Zahnrad 409 des Getriebes 407 verbunden, welches mit einem ersten Zahnrad 408 des Getriebes 407 kämmt. Das erste Zahnrad 408 des Getriebes 407 ist drehfest auf einer Radsatzwelle 405 eines Treibradsatzes 404 angeordnet. Die Radsatzwelle 405, welche Radscheiben 406 des Schienenfahrzeugs trägt, ist über nicht dargestellte Radsatzlager ebenfalls an dem Fahrzeugrahmen 402 gelagert.

## Patentansprüche

1. Zahnkupplung der doppelkardanischen Bauart, umfassend
- ein erstes innenverzahntes (208a) Kupplungsteil (201) zum drehfesten Verbinden mit einer treibenden Welle (302),
- ein zweites innenverzahntes (208b) Kupplungsteil (203) zum drehfesten Verbinden mit einer getriebenen Welle (304), und
- ein hohlzylindrisches Verbindungsglied (205), das an seinen beiden Endbereichen je eine Außenverzahnung (207a, 207b) aufweist, von denen die eine (207a) in die Innenverzahnung (208a) des ersten Kupplungsteils (201) und die andere (207b) in die Innenverzahnung (208b) des zweiten Kupplungsteils (203) eingreift,
wobei
- zumindest eines der beiden innenverzahnten Kupplungsteile (201, 203) einen Flansch (240) aufweist zur Ausbildung einer drehfesten Schraubverbindung mit der entsprechenden Welle, **dadurch gekennzeichnet, dass** das außenverzahnte Verbindungsglied (205) einteilig ausgebildet ist, und die Endbereiche mit den Außenverzahnungen (207a, 207b) des hohlzylindrischen Verbindungsglieds (205) nach außen gestülpt und einander zugewandt ausgebildet sind.

2. Zahnkupplung nach Anspruch 1, wobei das erste innenverzahnte Kupplungsteil (201) eine Nabe (202) aufweist zum drehfesten Aufsetzen auf die treibende Welle (302) und das zweite innenverzahnte Kupplungsteil (203) einen Flansch (240) aufweist zur Ausbildung einer drehfesten Verbindung (303) mit der getriebenen Welle (304).

3. Zahnkupplung nach einem der vorhergehenden Ansprüche, wobei der Flansch (240) eine Stirnverzahnung (303) aufweist zum Eingreifen in eine korrespondierende Verzahnung (303) der entsprechenden Welle (304).

4. Zahnkupplung nach einem der vorhergehenden Ansprüche, wobei das Verbindungsglied (205) aus einem elektrisch isolierenden Material besteht, vorzugsweise aus GFK.

5. Schienenfahrzeug mit einer Zahnkupplung (400) nach einem der Ansprüche 1 bis 4.

6. Schienenfahrzeug nach Anspruch 5, wobei die Zahnkupplung (400) eine Motorausgangswelle (302) und eine Getriebeeingangswelle (304) verbindet.

## Claims

1. Tooth coupling of the double cardanic type, comprising
- a first internally toothed (208a) coupling part (201) for the torque-proof connection with a driving shaft (302),
- a second internally toothed (208b) coupling part (203) for the torque-proof connection with a driven shaft (304), and
- a hollow-cylindrical connecting element (205), which has an external toothing (207a, 207b) on its two end regions in each case, of which the one (207a) engages into the internal toothing (208a) of the first coupling part (201) and the other (207b) engages into the internal toothing (208b) of the second coupling part (203),
wherein
- at least one of the two internally toothed coupling parts (201, 203) has a flange (240) for forming a torque-proof screw connection with the corresponding shaft, **characterised in that** the externally toothed connecting element (205) is embodied in one piece and the end regions with the external toothings (207a, 207b) of the hollow cylindrical connecting element (205) are embodied to be externally covered and to face one another.

2. Tooth coupling according to claim 1, wherein the first internally toothed coupling part (201) has a hub (202) for the torque-proof attachment onto the driving shaft (302) and the second internally toothed coupling part (203) has a flange (240) for forming a toque-proof connection (303) with the driven shaft (204).

3. Tooth coupling according to one of the preceding claims, wherein the flange (240) has a spur gearing (303) for engaging into a corresponding toothing (303) of the corresponding shaft (304) .

4. Tooth coupling according to one of the preceding claims, wherein the connecting element (205) consists of an electrically insulating material, preferably of glass-fibre reinforced plastic (GFP).

5. Rail vehicle with a tooth coupling (400) according to one of claims 1 to 4.

6. Rail vehicle according to claim 5, wherein the tooth coupling (400) connects a motor output shaft (302) and a gearing input shaft (304).

## Revendications

1. Accouplement à dents du type de construction à double cardan, comprenant
- une première partie (201) d'accouplement à denture (208) intérieure pour la liaison solidaire en rotation à un arbre (302) menant,
- une deuxième partie (203) d'accouplement à denture (208b) intérieure pour la liaison solidaire en rotation à un arbre (304) mené et
- un élément (205) de liaison cylindrique creux, qui a à ses deux parties d'extrémités respectivement une denture (207a, 207b) extérieure, dont l'une (207a) engrène dans la denture (208a) intérieure de la première partie (201) d'accouplement et l'autre (207b) dans la denture (208b) intérieure de la deuxième partie (203) d'accouplement,
dans lequel
- au moins l'une des deux parties (201, 203) d'accouplement à denture intérieure a une bride (240) pour la constitution d'un vissage solidaire en rotation de l'arbre correspondant, **caractérisé en ce que** l'organe (205) de liaison à denture extérieure est constitué d'une seule pièce et les parties d'extrémité ayant les dentures (207a, 207b) extérieures de l'organe (205) de liaison cylindrique creux sont constituées en étant retournées vers l'extérieur et tournées l'une vers l'autre.

2. Accouplement à dents suivant la revendication 1, dans lequel la première partie (201) d'accouplement à denture intérieure a un moyeu (202) pour la mettre d'une manière solidaire en rotation sur l'arbre (302) menant et la deuxième partie (203) d'accouplement à denture intérieure a une bride (240) pour la constitution d'une liaison (303) solidaire en rotation à l'arbre (304) mené.

3. Accouplement à dents suivant l'une des revendications précédentes, dans lequel la bride (240) a une denture (303) frontale d'engrènement dans une denture (303) correspondante de l'arbre (304) correspondant.

4. Accouplement à dents suivant l'une des revendications précédentes, dans lequel l'élément (205) de liaison est en un matériau isolant électriquement, de préférence en GFK.

5. Véhicule ferroviaire ayant un accouplement (400) à dent suivant l'une des revendications 1 à 4.

6. Véhicule ferroviaire suivant la revendication 5, dans lequel l'accouplement (400) à dents relie un arbre (302) de sortie d'un moteur et un arbre (304) d'entrée d'une transmission.
